(19)

**Europäisches Patentamt**
**European Patent Office**
**Office européen des brevets**

(11)  **EP 4 692 395 A1**

(12)  **EUROPEAN PATENT APPLICATION**
published in accordance with Art. 153(4) EPC

(43) Date of publication:
**11.02.2026  Bulletin 2026/07**

(21) Application number: **23932131.8**

(22) Date of filing: **27.10.2023**

(51) International Patent Classification (IPC):
*C22C 38/00* (2006.01)    *C22C 38/54* (2006.01)
*C21D 8/04* (2026.01)    *C21D 9/48* (2006.01)

(52) Cooperative Patent Classification (CPC):
**C22C 38/00; C22C 38/54;** C21D 8/04; C21D 9/48

(86) International application number:
**PCT/JP2023/038987**

(87) International publication number:
**WO 2024/209721 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2023  JP 2023062264**

(71) Applicant: NIPPON STEEL CORPORATION
**Tokyo 100-8071 (JP)**

(72) Inventors:
• OKA, Masaharu
  **Tokyo 100-8071 (JP)**
• HIKIDA, Kazuo
  **Tokyo 100-8071 (JP)**
• DAIROKUNO, Yuta
  **Tokyo 100-8071 (JP)**

(74) Representative: **J A Kemp LLP**
**80 Turnmill Street**
**London EC1M 5QU (GB)**

(54)  **STEEL SHEET**

(57)    A steel sheet excellent in high temperature strength is provided. A steel sheet of the present disclosure has a chemical composition containing, in mass%, C: 0.040 to 0.070%, Si: more than 0 to 0.10%, Mn: 0.20 to 0.40%, P: more than 0 to 0.030%, S: more than 0 to 0.030%, sol. Al: 0.005 to 0.100%, N: more than 0% to 0.0150%, B: 0.0001 to 0.0030%, Ti: 0 to 0.010%, Nb: 0 to 0.010%, Cu: 0 to 0.5%, Ni: 0 to 0.5%, Cr: 0 to 0.3%, and Sn: 0 to 0.05%. In the steel sheet, ferrite is the main phase, a grain size number is 11.0 or more, a sheet thickness is 0.15 to 1.00 mm, and at room temperature, the yield strength is 220 to 500 MPa, the tensile strength is 330 to 550 MPa, and the total elongation is 20.0% or more. An aging index AI is 50.0 MPa or more. A ratio of the tensile strength at 300°C to the tensile strength at room temperature is 0.90 or more.

EP 4 692 395 A1

## Description

TECHNICAL FIELD

The present disclosure relates to a steel sheet, and more particularly relates to a steel sheet which is used as a starting material for battery cans and is subjected to press working during a process for manufacturing battery cans.

BACKGROUND ART

Steel sheets are used as starting materials for battery cans that are used for secondary batteries, as typified by lithium ion batteries, and the like. A steel sheet for use for battery cans is usually formed into the shape of a battery can by press working after an Ni plating layer or an Ni diffusion plating layer is formed on the steel sheet. Specifically, a steel sheet on which the aforementioned plating layer is formed is subjected to multi-stage drawing and DI (drawing and ironing) to be thereby formed into the shape of a battery can.

Such steel sheets that are used as starting materials for battery cans and subjected to press working are required to have strength at room temperature after can manufacturing, press formability, and surface deterioration resistance. The term "press formability" means a characteristic such that, during press working, which is typified by drawing or drawing and ironing, the steel sheet can be formed while suppressing the occurrence of defects such as cracks in the steel sheet. The term "surface deterioration resistance" means that surface deterioration of the steel sheet after press working is suppressed.

In steel sheets that are used as a starting material for battery cans and subjected to press working, the strength of the battery cans after can manufacturing, the press formability, and the surface deterioration resistance are increased by adjusting the microstructure, the size of the grains, and the mechanical properties (yield strength, tensile strength, and total elongation) at room temperature.

For example, Japanese Patent No. 3516813 (Patent Literature 1) discloses a steel sheet containing, in mass%, C: 0.0030% or less, Si: 0.05% or less, Mn: 0.5% or less, P: 0.03% or less, S: 0.020% or less, sol. Al: 0.01 to 0.100%, N: 0.0070% or less, Ti: 0.01 to 0.050%, Nb: 0.008 to 0.030%, and B: 0.0002 to 0.0007%, with the balance being Fe and unavoidable elements. In addition, in this steel sheet, the grain size number is to be 10.0 or more.

Further, Japanese Patent No. 5359709 (Patent Literature 2) discloses a steel sheet containing, in mass%, C: 0.0035 to 0.0080%, Si: 0.35% or less, Mn: 1.0% or less, P: 0.030% or less, S: 0.025% or less, sol. Al: 0.003 to 0.100%, N: 0.0100% or less, and Nb: 0.040% or less and (3 to 6) $\times$ C%, with the balance being Fe and unavoidable impurities. In addition, in this steel sheet, the grain size number of recrystallized grains is to be 11.0 to 13.0.

In the steel sheets disclosed in Patent Literature 1 and Patent Literature 2, surface deterioration resistance is increased by adjusting the grain size number.

International Application Publication No. WO2016/080344 (Patent Literature 3) discloses a steel sheet containing, in mass%, C: more than 0.150 to 0.250%, sol. Al: 0.005 to 0.100%, B: 0.0005 to 0.02%, Si: 0.50% or less, Mn: 0.70% or less, P: 0.070% or less, S: 0.05% or less, N: 0.0080% or less, Nb: 0.003% or less, and Ti: 0.003% or less, with the balance being Fe and impurities. In addition, in this steel sheet, the yield strength after an aging treatment is 310 to 370 MPa, and the total elongation is 24 to 30%.

Further, International Application Publication No. WO2016/060248 (Patent Literature 4) discloses a steel sheet that contains as chemical constituents, in mass%, C: more than 0.150 to 0.260%, sol. Al: 0.005 to 0.100%, B: 0.0005 to 0.02%, Si: 0.50% or less, Mn: 0.70% or less, P: 0.070% or less, S: 0.05% or less, N: 0.0080% or less, Nb: 0.003% or less, and Ti: 0.003% or less, with the balance being Fe and impurities. This steel sheet includes ferrite and spherical cementite as the microstructure and, after an aging treatment, the yield strength is 360 to 430 MPa and the total elongation is 25 to 32%.

In the steel sheets disclosed in Patent Literature 3 and Patent Literature 4, the strength of battery cans after can manufacturing is increased by adjusting the yield strength, and the press formability of the steel sheet is enhanced by adjusting the microstructure and total elongation.

CITATION LIST

PATENT LITERATURE

Patent Literature 1: Japanese Patent No. 3516813
Patent Literature 2: Japanese Patent No. 5359709
Patent Literature 3: International Application Publication No. WO2016/080344

# EP 4 692 395 A1

Patent Literature 4: International Application Publication No. WO2016/060248

## SUMMARY OF INVENTION

### TECHNICAL PROBLEM

In this connection, in lithium ion batteries mounted in electric vehicles and the like, in some cases abnormal heat generation may occur within the battery due to an internal short-circuit or overcharging. If abnormal heat generation occurs, the battery can temperature will become a high temperature of about 200 to 300°C. In the present description, the term "high temperature" means 200 to 300°C. It is preferable that the battery can strength can be maintained even when such kind of abnormal heat generation occurs in a battery can. Therefore, steel sheets which are to be used as starting materials for battery cans and are to be subjected to press working are also required to have high temperature strength at 200 to 300°C.

Usually, the strength of a steel sheet at a high temperature is significantly lower than the strength of the steel sheet at room temperature. In Patent Literature 1 to Patent Literature 4, there is no discussion regarding the high temperature strength of steel sheets for battery can applications.

An objective of the present disclosure is to provide a steel sheet that has excellent high temperature strength.

### SOLUTION TO PROBLEM

A steel sheet of the present disclosure has a chemical composition consisting of, in mass%,

C: 0.040 to 0.070%,
Si: more than 0 to 0.10%,
Mn: 0.20 to 0.40%,
P: more than 0 to 0.030%,
S: more than 0 to 0.030%,
sol. Al: 0.005 to 0.100%,
N: more than 0% to 0.0150%,
B: 0.0001 to 0.0030%,
Ti: 0 to 0.010%,
Nb: 0 to 0.010%,
Cu: 0 to 0.5%,
Ni: 0 to 0.5%,
Cr: 0 to 0.3%, and
Sn: 0 to 0.05%,
with the balance being Fe and impurities, and
has a microstructure in which ferrite is a main phase and a grain size number of the ferrite is 11.0 or more, wherein
the steel sheet has a sheet thickness that is 0.15 to 1.00 mm;
the steel sheet has a yield strength that is 220 to 500 MPa at room temperature, a tensile strength that is 330 to 550 MPa at room temperature, and a total elongation that is 20.0% or more at room temperature;
the steel sheet has an aging index AI that is 50.0 MPa or more; and
a ratio of a tensile strength of the steel sheet at 300°C to the tensile strength at room temperature is 0.90 or more.

### ADVANTAGEOUS EFFECTS OF INVENTION

The steel sheet of the present disclosure has excellent high temperature strength.

### DESCRIPTION OF EMBODIMENTS

With respect to steel sheets that are suitable for starting materials for battery cans and that will be subjected to press working, the present inventors first investigated means for increasing the strength of a battery can after can manufacturing, the press formability, and the surface deterioration resistance. As is also proposed in Patent Literature 1 to Patent Literature 4, in a steel sheet, the chemical composition, the microstructure, the size of the grains, and the mechanical properties (yield strength, total elongation and the like) at room temperature influence the strength of a battery can after can manufacturing, the press formability, and the surface deterioration resistance. Therefore, the present inventors conducted studies regarding the chemical composition, the microstructure, and the size of grains of steel sheets. As a result, the present inventors have discovered that if a steel sheet has a chemical composition consisting of, in mass%,

C: 0.040 to 0.070%, Si: more than 0 to 0.10%, Mn: 0.20 to 0.40%, P: more than 0 to 0.030%, S: more than 0 to 0.030%, sol. Al: 0.005 to 0.100%, N: more than 0% to 0.0150%, B: 0.0001 to 0.0030%, Ti: 0 to 0.010%, Nb: 0 to 0.010%, Cu: 0 to 0.5%, Ni: 0 to 0.5%, Cr: 0 to 0.3%, and Sn: 0 to 0.05%, with the balance being Fe and impurities, and has a microstructure in which ferrite is the main phase and the grain size number of ferrite is 11.0 or more, a sheet thickness that is 0.15 to 1.00 mm, a yield strength that is 200 to 500 MPa at room temperature, a tensile strength that is 330 to 550 MPa at room temperature, and a total elongation that is 20.0% or more at room temperature, the steel sheet is suitable for a starting material for battery cans and in the steel sheet subject to press working, sufficient strength is obtained in a battery can after can manufacturing, and sufficient press formability and sufficient surface deterioration resistance are obtained.

The present inventors also conducted studies regarding means for increasing the high temperature strength in a steel sheet satisfying the features regarding the chemical composition, microstructure, grain size number, and sheet thickness described above.

Here, the present inventors focused on the dissolved C amount and dissolved N amount in the steel sheet. Dissolved C and dissolved N in a steel sheet decrease press formability. Therefore, in the case of a steel sheet to be subjected to press working, annealing of the steel sheet is performed prior to press working, and thereafter the steel sheet is also subjected to an over-aging treatment and the like to reduce the dissolved C amount and dissolved N amount.

However, the present inventors conceived of intentionally causing a dissolved C amount and a dissolved N amount to remain in a steel sheet in order to increase the high temperature strength. The temperature range in which strength is required for battery cans is about 200 to 300°C as mentioned above. If dissolved C and dissolved N are present in a steel sheet in such a high temperature range, dynamic strain aging will occur. That is, in the aforementioned high temperature range, dissolved C and dissolved N diffuse appropriately and adhere to dislocations in the steel sheet. Therefore, it is considered that dissolved C and dissolved N contribute to improving the high temperature strength at 200 to 300°C.

Therefore, the present inventors attempted to secure high strength in the high temperature range of 200 to 300°C by intentionally securing a certain amount of dissolved C and a certain amount of dissolved N in a steel sheet. Here, it is extremely difficult to quantitatively analyze a dissolved C amount and a dissolved N amount in a steel sheet. Therefore, the present inventors have focused on the aging index AI as an index that indicates the dissolved C amount and the dissolved N amount in a steel sheet. The dissolved C amount and dissolved N amount in a steel sheet correlate with the aging index AI. Specifically, the larger the dissolved C amount and dissolved N amount in a steel sheet are, the higher the aging index AI becomes. Accordingly, it is possible to estimate the dissolved C amount and dissolved N amount in a steel sheet based on the aging index AI.

Therefore, in addition, the present inventors tried adjusting the aging index AI in a steel sheet satisfying the aforementioned features regarding the chemical composition, microstructure, grain size number, sheet thickness, and mechanical properties at room temperature. As a result, the present inventors have discovered that if the aging index AI is 50.0 MPa or more, in a steel sheet having the aforementioned chemical composition, microstructure, grain size number, and sheet thickness, the aforementioned mechanical properties at room temperature can be maintained, and furthermore, the high temperature strength at 200 to 300°C can be increased. Specifically, the present inventors have discovered by making the aging index AI 50.0 MPa or more in a steel sheet satisfying the aforementioned features regarding the chemical composition, microstructure, grain size number, sheet thickness, and mechanical properties at room temperature, the ratio of the tensile strength at 300°C to the tensile strength at room temperature can be made 0.90 or more.

A steel sheet of the present embodiment, which has been completed based on the technical idea described above, is as follows.

A steel sheet according to a first aspect has a chemical composition consisting of, in mass%,

C: 0.040 to 0.070%,
Si: more than 0 to 0.10%,
Mn: 0.20 to 0.40%,
P: more than 0 to 0.030%,
S: more than 0 to 0.030%,
sol. Al: 0.005 to 0.100%,
N: more than 0% to 0.0150%,
B: 0.0001 to 0.0030%,
Ti: 0 to 0.010%,
Nb: 0 to 0.010%,
Cu: 0 to 0.5%,
Ni: 0 to 0.5%,
Cr: 0 to 0.3%, and
Sn: 0 to 0.05%,
with the balance being Fe and impurities, and

has a microstructure in which ferrite is a main phase and a grain size number of the ferrite is 11.0 or more, wherein the steel sheet has a sheet thickness that is 0.15 to 1.00 mm;

the steel sheet has a yield strength that is 220 to 500 MPa at room temperature, a tensile strength that is 330 to 550 MPa at room temperature, and a total elongation that is 20.0% or more at room temperature;

the steel sheet has an aging index AI that is 50.0 MPa or more; and

a ratio of a tensile strength of the steel sheet at 300°C to the tensile strength at room temperature is 0.90 or more.

A steel sheet according to a second aspect is in accordance with the steel sheet of the first aspect, and further includes:

a plating layer formed on a surface of the steel sheet,

wherein the plating layer is one or more types selected from a group consisting of an Ni plating layer and an Ni diffusion plating layer.

A steel sheet according to a third aspect is in accordance with the steel sheet of the first or second aspect, wherein the chemical composition contains one or more types of element selected from a group consisting of:

Ti: 0.001 to 0.010%,
Nb: 0.001 to 0.010%,
Cu: 0.1 to 0.5%,
Ni: 0.1 to 0.5%,
Cr: 0.1 to 0.3%, and
Sn: 0.01 to 0.05%.

A steel sheet according to a fourth aspect is in accordance with the steel sheet of any one of the first to third aspects, wherein:

the balance of the microstructure is one or more types selected from a group consisting of pearlite, cementite, bainite, and martensite.

Hereunder, the steel sheet of the present embodiment is described. Note that, term "steel sheet" of the present embodiment also includes a steel strip. Further, the symbol "%" in relation to elements means "mass percent" unless otherwise stated.

[Features of steel sheet of present embodiment]

The steel sheet of the present embodiment satisfies the following features.

(Feature 1)

The chemical composition contains, in mass%, C: 0.040 to 0.070%, Si: more than 0 to 0.10%, Mn: 0.20 to 0.40%, P: more than 0 to 0.030%, S: more than 0 to 0.030%, sol. Al: 0.005 to 0.100%, N: more than 0% to 0.0150%, B: 0.0001 to 0.0030%, Ti: 0 to 0.010%, Nb: 0 to 0.010%, Cu: 0 to 0.5%, Ni: 0 to 0.5%, Cr: 0 to 0.3%, and Sn: 0 to 0.05%, with the balance being Fe and impurities.

(Feature 2)

In the microstructure, ferrite is the main phase, and the grain size number is 11.0 or more.

(Feature 3)

The sheet thickness is 0.15 to 1.00 mm.

(Feature 4)

The yield strength at room temperature is 220 to 500 MPa, the tensile strength at room temperature is 330 to 550 MPa, and the total elongation at room temperature is 20.0% or more.

(Feature 5)

The aging index AI is 50.0 MPa or more, and a ratio of the tensile strength at 300°C to the tensile strength at room temperature is 0.90 or more.

Hereunder, feature 1 to feature 5 are described.

[(Feature 1) Regarding chemical composition]

The chemical composition of the steel sheet of the present embodiment contains the following elements.

C: 0.040 to 0.070%

Carbon (C), by being present as dissolved C in the steel, causes dynamic strain aging in a high temperature range of 200 to 300°C, which is a heat generation temperature in a case where a battery can is short-circuited, and thereby increases the high temperature strength of the steel sheet. In addition, C combines with other alloying elements to form carbides, and thereby refines the grains of the steel. By refining the grains, the surface deterioration resistance of the steel sheet during press working, such as drawing, is increased. If the content of C is less than 0.040%, the aforementioned advantageous effects will not be sufficiently obtained.

On the other hand, if the content of C is more than 0.070%, press formability will decrease.

Therefore, the content of C is 0.040 to 0.070%.

A preferable lower limit of the content of C is 0.043%, more preferably is 0.045%, and further preferably is 0.050%.

A preferable upper limit of the content of C is 0.068%, more preferably is 0.065%, and further preferably is 0.060%.

A preferable range of the content of C is, for example, 0.043 to 0.060%, more preferably is 0.045 to 0.065%, and further preferably is 0.050 to 0.060%.

Si: more than 0 to 0.10%

Silicon (Si) deoxidizes the steel in a steelmaking process during the process of producing the steel sheet. However, if the content of Si is more than 0.10%, the plating close-attachment with respect to the steel sheet will decrease. In addition, the paint close-attachment with respect to the steel sheet after can manufacturing will decrease.

Therefore, the content of Si is more than 0 to 0.10%.

The content of Si is preferably as low as possible. However, excessively reducing the content of Si will raise the production cost. Therefore, taking into consideration normal industrial production, a preferable lower limit of the content of Si is 0.01%, more preferably is 0.02%, and further preferably is 0.03%.

A preferable upper limit of the content of Si is 0.09%, more preferably is 0.08%, and further preferably is 0.07%.

A preferable range of the content of Si is, for example, 0.01 to 0.09%, more preferably is 0.02 to 0.08%, and further preferably is 0.03 to 0.07%.

Mn: 0.20 to 0.40%

Manganese (Mn) increases the strength of the steel sheet at room temperature by solid-solution strengthening. Mn also combines with S in the steel to form MnS. Because S is immobilized by formation of MnS, the hot workability of the steel sheet increases. If the content of Mn is less than 0.20%, the aforementioned advantageous effects will not be sufficiently obtained.

On the other hand, if the content of Mn is more than 0.40%, the strength of the steel sheet at room temperature will excessively increase due to the solid-solution strengthening by Mn. As a result, the press formability of the steel sheet will decrease.

Therefore, the content of Mn is 0.20 to 0.40%.

A preferable lower limit of the content of Mn is 0.21%, more preferably is 0.23%, and further preferably is 0.25%.

A preferable upper limit of the content of Mn is 0.38%, more preferably is 0.36%, and further preferably is 0.35%.

A preferable range of the content of Mn is, for example, 0.21 to 0.38%, more preferably is 0.23 to 0.36%, and further preferably is 0.25 to 0.35%.

P: more than 0 to 0.030%

Phosphorus (P) increases the strength of the steel sheet at room temperature by solid-solution strengthening. However, if the content of P is more than 0.030%, P will excessively segregate to grain boundaries. As a result, the toughness and press formability of the steel sheet will decrease.

Therefore, the content of P is more than 0 to 0.030%.

The content of P is preferably as low as possible. However, if the content of P is excessively reduced, the production cost will increase. Therefore, taking into consideration normal industrial production, a preferable lower limit of the content of P is 0.001%, more preferably is 0.002%, and further preferably is 0.003%.

A preferable upper limit of the content of P is 0.025%, more preferably is 0.022%, and further preferably is 0.020%.

A preferable range of the content of P is, for example, 0.001 to 0.025%, more preferably is 0.002 to 0.022%, and further preferably is 0.003 to 0.020%.

S: more than 0 to 0.030%

Sulfur (S) reduces the hot workability, toughness, and ductility of the steel. If the content of S is more than 0.030%, the hot workability, toughness, and ductility of the steel will markedly decrease.

Therefore, the content of S is more than 0 to 0.030%.

The content of S is preferably as low as possible. However, if the content of S is excessively reduced, the production cost will increase. Therefore, taking into consideration normal industrial production, a preferable lower limit of the content of S is 0.001%, more preferably is 0.002%, and further preferably is 0.003%.

A preferable upper limit of the content of S is 0.025%, more preferably is 0.022%, and further preferably is 0.020%.

A preferable range of the content of S is, for example, 0.001 to 0.025%, more preferably is 0.002 to 0.022%, and further preferably is 0.003 to 0.020%.

Sol. Al: 0.005 to 0.100%

Aluminum (Al) deoxidizes the steel in the steelmaking process during the steel sheet production process. Al also combines with N in the steel to form AlN. AlN refines the grains. By refining the grains, the surface deterioration resistance of the steel sheet during press working, such as drawing, is increased. If the content of sol. Al is less than 0.005%, the aforementioned advantageous effects will not be sufficiently obtained.

On the other hand, if the content of sol. Al is more than 0.100%, AlN will excessively form. In such case, the toughness of the steel sheet will decrease.

Therefore, the content of sol. Al is 0.005 to 0.100%.

A preferable lower limit of the content of sol. Al is 0.007%, more preferably is 0.010%, and further preferably is 0.012%.

A preferable upper limit of the content of sol. Al is 0.070%, more preferably is 0.050%, further preferably is 0.040%, further preferably is 0.035%, further preferably is 0.030%, and further preferably is 0.025%.

A preferable range of the content of sol. Al is, for example, 0.007 to 0.070%, more preferably is 0.007 to 0.050%, further preferably is 0.010 to 0.040%, further preferably is 0.010 to 0.035%, further preferably is 0.012 to 0.030%, and further preferably is 0.012 to 0.025%.

Note that, in the present description, the content of sol. Al means the content of acid-soluble Al (sol. Al). In the steel sheet of the present embodiment, acid-insoluble Al (insol. Al) is, for example, alumina ($Al_2O_3$).

N: more than 0% to 0.0150%

Nitrogen (N), similarly to C, by being present as dissolved N in the steel, causes dynamic strain aging in a high temperature range of 200 to 300°C, which is a heat generation temperature in a case where a battery can is short-circuited, and thereby increases the high temperature strength of the steel sheet. In addition, N forms nitrides that are typified by AlN, and refines the grains. As a result, the surface deterioration resistance of the steel sheet during press working, such as drawing, is increased.

However, if the content of N is more than 0.0150%, nitrides will excessively form. In such case, the toughness of the steel sheet will decrease.

Therefore, the content of N is more than 0 to 0.0150%.

A preferable lower limit of the content of N is 0.0001%, more preferably is 0.0010%, further preferably is 0.0015%, further preferably is 0.0020%, further preferably is 0.0025%, further preferably is 0.0035%, and further preferably is 0.0050%.

A preferable upper limit of the content of N is 0.0145%, more preferably is 0.0140%, further preferably is 0.0130%, further preferably is 0.0120%, further preferably is 0.0110%, further preferably is 0.0100%, and further preferably is 0.0080%.

A preferable range of the content of N is, for example, 0.0001 to 0.0145%, more preferably is 0.0010 to 0.0140%, further preferably is 0.0015 to 0.0130%, further preferably is 0.0020 to 0.0120%, further preferably is 0.0025 to 0.0110%, further preferably is 0.0035 to 0.0100%, and further preferably is 0.0050 to 0.0080%.

B: 0.0001 to 0.0030%

Boron (B) segregates to grain boundaries and thereby suppresses segregation of P and S to grain boundaries. Therefore, the press formability, hot workability, and toughness of the steel sheet are enhanced. If the content of B is less than 0.0001%, the aforementioned advantageous effect will not be sufficiently obtained.

On the other hand, if the content of B is more than 0.0030%, B will excessively segregate to grain boundaries or carbides of B will precipitate. In such case, the hot workability and toughness of the steel sheet will decrease due to the segregation or precipitation of B.

Therefore, the content of B is 0.0001 to 0.0030%.

A preferable lower limit of the content of B is 0.0003%, more preferably is 0.0005%, further preferably is 0.0007%, further preferably is 0.0010%, and further preferably is 0.0015%.

A preferable upper limit of the content of B is 0.0028%, more preferably is 0.0026%, further preferably is 0.0024%, further preferably is 0.0022%, and further preferably is 0.0020%.

A preferable range of the content of B is, for example, 0.0003 to 0.0028%, more preferably is 0.0005 to 0.0026%, further preferably is 0.0007 to 0.0024%, further preferably is 0.0010 to 0.0022%, and further preferably is 0.0015 to 0.0020%.

The balance of the chemical composition of the steel sheet of the present embodiment is Fe and impurities. Here, the term "impurities" refers to substances which, when industrially producing the steel sheet, are mixed in from ore or scrap used as a raw material or from the production environment or the like, and which are allowed within a range that does not adversely affect the steel sheet of the present embodiment.

[Regarding optional elements]

The steel sheet of the present embodiment may further contain, in lieu of a part of Fe, one or more types of element selected from a group consisting of:

Ti: 0 to 0.010%,
Nb: 0 to 0.010%,
Cu: 0 to 0.5%,
Ni: 0 to 0.5%,
Cr: 0 to 0.3%, and
Sn: 0 to 0.05%.

Each optional element is described hereunder.

[First group: Ti and Nb]

The chemical composition of the steel sheet of the present embodiment may contain one or more types of element selected from a group consisting of Ti and Nb in lieu of a part of Fe. Each of Ti and Nb forms carbo-nitrides and refines the grains. As a result, the surface deterioration resistance of the steel sheet during press working, such as drawing, increases. Note that, in the present description the term "carbo-nitrides" is a general term that includes carbides, nitrides, and carbo-nitrides.

Ti: 0 to 0.010%

Titanium (Ti) is an optional element, and does not have to be contained. That is, the content of Ti may be 0%.

When contained, in other words, when the content of Ti is more than 0%, Ti combines with C and/or N in the steel to form Ti carbo-nitrides. The Ti carbo-nitrides refine the grains. As a result, the surface deterioration resistance of the steel sheet during press working, such as drawing, increases. If even a small amount of Ti is contained, the aforementioned advantageous effect will be obtained to a certain extent.

However, if the content of Ti is more than 0.010%, Ti carbo-nitrides will excessively form. In such case, the dissolved C amount and dissolved N amount that contribute to dynamic strain aging in the temperature range of 200 to 300°C will become excessively small. As a result, sufficient high temperature strength will not be obtained in the steel sheet.

Therefore, the content of Ti is 0 to 0.010%.

A preferable lower limit of the content of Ti is 0.001%, and more preferably is 0.002%.

A preferable upper limit of the content of Ti is 0.009%, and more preferably is 0.008%.

A preferable range of the content of Ti is, for example, 0.001 to 0.009%, and more preferably is 0.002 to 0.008%.

Nb: 0 to 0.010%

Niobium (Nb) is an optional element, and does not have to be contained. That is, the content of Nb may be 0%.

When contained, in other words, when the content of Nb is more than 0%, Nb combines with C and/or N in the steel to form Nb carbo-nitrides. The Nb carbo-nitrides refine the grains. As a result, the surface deterioration resistance of the steel sheet during press working, such as drawing, increases. If even a small amount of Nb is contained, the aforementioned advantageous effect will be obtained to a certain extent.

However, if the content of Nb is more than 0.010%, Nb carbo-nitrides will excessively form. In such case, the dissolved C amount and dissolved N amount that contribute to dynamic strain aging in the temperature range of 200 to 300°C will become excessively small. As a result, sufficient high temperature strength will not be obtained in the steel sheet.

Therefore, the content of Nb is 0 to 0.010%.

A preferable lower limit of the content of Nb is 0.001%, and more preferably is 0.002%.

A preferable upper limit of the content of Nb is 0.009%, and more preferably is 0.008%.

A preferable range of the content of Nb is, for example, 0.001 to 0.009%, and more preferably is 0.002 to 0.008%.

[Second group: Cu, Ni, Cr, and Sn]

The chemical composition of the steel sheet of the present embodiment may contain one or more types of element selected from a group consisting of Cu, Ni, Cr, and Sn in lieu of a part of Fe. Each of these elements may be contained in scrap when scrap is used as a raw material for the steel sheet. These elements are so-called "tramp elements".

Cu: 0 to 0.5%

Copper (Cu) is an optional element, and does not have to be contained. That is, the content of Cu may be 0%. In the steel sheet of the present embodiment, Cu is a tramp element.

When contained, in other words, in a case where the content of Cu is more than 0%, the press formability of the steel sheet will decrease if the content of Cu is more than 0.5%.

Therefore, the content of Cu is 0 to 0.5%.

The content of Cu is preferably as low as possible. However, if the content of Cu is excessively reduced, the production cost will increase. Therefore, taking into consideration normal industrial production, a preferable lower limit of the content of Cu is 0.1%.

A preferable upper limit of the content of Cu is 0.4%, and more preferably is 0.3%.

A preferable range of the content of Cu is, for example, 0.1 to 0.4%, and more preferably is 0.1 to 0.3%.

Ni: 0 to 0.5%

Nickel (Ni) is an optional element, and does not have to be contained. That is, the content of Ni may be 0%. In the steel sheet of the present embodiment, Ni is a tramp element.

When contained, in other words, in a case where the content of Ni is more than 0%, the press formability of the steel sheet will decrease if the content of Ni is more than 0.5%.

Therefore, the content of Ni is 0 to 0.5%.

The content of Ni is preferably as low as possible. However, if the content of Ni is excessively reduced, the production cost will increase. Therefore, taking into consideration normal industrial production, a preferable lower limit of the content of Ni is 0.1%.

A preferable upper limit of the content of Ni is 0.4%, and more preferably is 0.3%.

A preferable range of the content of Ni is, for example, 0.1 to 0.4%, and more preferably is 0.1 to 0.3%.

Cr: 0 to 0.3%

Chromium (Cr) is an optional element, and does not have to be contained. That is, the content of Cr may be 0%. In the steel sheet of the present embodiment, Cr is a tramp element.

When contained, in other words, in a case where the content of Cr is more than 0%, the press formability of the steel sheet will decrease if the content of Cr is more than 0.3%.

Therefore, the content of Cr is 0 to 0.3%.

The content of Cr is preferably as low as possible. However, if the content of Cr is excessively reduced, the production cost will increase. Therefore, taking into consideration normal industrial production, a preferable lower limit of the content of Cr is 0.1%.

A preferable upper limit of the content of Cr is 0.2%.

A preferable range of the content of Cr is, for example, 0.1 to 0.3%, and more preferably is 0.1 to 0.2%.

Sn: 0 to 0.05%

Tin (Sn) is an optional element, and does not have to be contained. That is, the content of Sn may be 0%. In the steel sheet of the present embodiment, Sn is a tramp element.

When contained, in other words, in a case where the content of Sn is more than 0%, Sn will excessively segregate to grain boundaries if the content of Sn is more than 0.05%. In such case, the hot workability and toughness of the steel sheet will decrease due to the segregation of Sn.

Therefore, the content of Sn is 0 to 0.05%.

The content of Sn is preferably as low as possible. However, if the content of Sn is excessively reduced, the production cost will increase. Therefore, taking into consideration normal industrial production, a preferable lower limit of the content of Sn is 0.01%.

A preferable upper limit of the content of Sn is 0.04%, and more preferably is 0.03%.

A preferable range of the content of Sn is, for example, 0.01 to 0.04%, and more preferably is 0.01 to 0.03%.

[(Feature 2) Regarding microstructure]

In the steel sheet of the present embodiment, in addition, in the microstructure, ferrite is the main phase, and the grain size number is 11.0 or more. These matters are described hereunder.

(Regarding main phase of microstructure)

In the microstructure of the steel sheet of the present embodiment, ferrite is the main phase. Here, the phrase "ferrite is the main phase" means that the area fraction of ferrite in the microstructure is 90% or more. When the main phase of the microstructure is ferrite, excellent press formability is obtained.

In the microstructure, the balance other than ferrite is one or more types selected from a group consisting of pearlite, cementite, bainite, and martensite. Preferably, the balance of the microstructure is one or more types selected from a group consisting of pearlite and cementite.

A preferable lower limit of the area fraction of ferrite in the microstructure is 92%, more preferably is 95%, further preferably is 97%, and most preferably is 100%.

(Method for identifying structures in microstructure and method for measuring area fraction of ferrite)

A method for identifying each structure (ferrite, pearlite, cementite, bainite, and martensite) in the microstructure, and a method for measuring the area fraction of ferrite are as follows.

A test specimen is taken from the central part of the width of the steel sheet, in which a cross section that is parallel to the rolling elongation direction and is parallel to the sheet thickness direction is adopted as an observation surface.

The observation surface is mirror-polished. On the observation surface after mirror polishing, a position at a depth of 1/4 of the sheet thickness in the sheet thickness direction from the surface of the steel sheet is set as an observation field. The observation field is etched with a nital etching reagent to reveal the microstructure.

The observation field after etching is observed with a scanning electron microscope (SEM) at a magnification of 1000×. The size of the observation field is set to 100 $\mu$m × 100 $\mu$m. In the SEM observation, each structure (ferrite, pearlite, cementite, bainite, and martensite) can be distinguished by the structure morphology, precipitation state of carbides, and dislocation density. For example, a structure that has a lamellar structure can be identified as pearlite. A phase without a substructure within the grains can be identified as ferrite. A phase that is granular and which has high brightness can be identified as cementite. A structure that has a lath-type structure can be identified as bainite and martensite. The ferrite in the observation field is identified, and the total area of the ferrite is calculated.

The area fraction (%) of ferrite is determined based on the total area of ferrite in five observation fields and the total area of the five observation fields.

(Regarding grain size number)

In the steel sheet of the present embodiment, the grain size number of ferrite is 11.0 or more.

If the grains of ferrite that is the main phase in the microstructure are coarse, the surface deterioration resistance of the steel sheet during press working, such as drawing, will decrease. Furthermore, if the grains of ferrite are coarse, in-plane anisotropy $\Delta r$ may increase and earing properties may decrease.

In the steel sheet of the present embodiment, the grain size number of ferrite is 11.0 or more, and the ferrite grains are sufficiently fine. Therefore, in the steel sheet during press working such as drawing, excellent surface deterioration resistance is obtained. In addition, in the steel sheet after press working, the in-plane anisotropy $\Delta r$ is small and excellent earing properties are obtained.

(Method for measuring ferrite grain size number)

The grain size number of ferrite in the steel sheet of the present embodiment is determined by the following method.

A test specimen is taken from the central part of the width of the steel sheet, in which a cross section that is parallel to the rolling elongation direction and is parallel to the sheet thickness direction is adopted as an observation surface.

The observation surface is mirror-polished. On the observation surface after mirror polishing, a position at a depth of 1/4 of the sheet thickness in the sheet thickness direction from the surface of the steel sheet is set as an observation field. The observation field is etched with a nital etching reagent to reveal the microstructure. The observation field after etching is observed with an optical microscope at a magnification of 400×. The size of the observation field is set to 300 μm × 200 μm.

In accordance with JIS G 0551 (2020), attention is focused on only the ferrite in the observation field, and the grain size number of the ferrite is measured. At such time, the grain size number is measured using a comparative method in accordance with 7.2 of JIS G 0551 (2020). The arithmetic average value of the grain size numbers obtained in the five observation fields is regarded as the grain size number of the ferrite.

[(Feature 3) Regarding sheet thickness]

The sheet thickness of the steel sheet of the present embodiment is 0.15 to 1.00 mm.

If the sheet thickness is less than 0.15 mm, it will be necessary to reduce the thickness of the hot-rolled steel sheet to be produced in a hot rolling process during a process for producing a steel sheet satisfying feature 1. In such case, it will be difficult to adjust a rolling finishing temperature FT (°C) in the hot rolling process and the cooling rate. As a result, it will not be possible to obtain a sufficient aging index AI in the steel sheet.

On the other hand, if the sheet thickness is more than 1.00 mm, sufficient press formability will not be obtained in a steel sheet satisfying feature 1.

Therefore, the sheet thickness of the steel sheet of the present embodiment is 0.15 to 1.00 mm.

A preferable lower limit of the sheet thickness is 0.20 mm, more preferably is 0.25 mm, and further preferably is 0.30 mm.

A preferable upper limit of the sheet thickness is 0.90 mm, more preferably is 0.80 mm, and further preferably is 0.70 mm.

A preferable range of the sheet thickness is, for example, 0.20 to 0.90 mm, more preferably is 0.25 to 0.80 mm, and further preferably is 0.30 to 0.70 mm.

Measurement of the sheet thickness can be carried out using a laser thickness gauge (laser triangulation rangefinder).

[(Feature 4) Regarding mechanical properties at room temperature]

In the steel sheet according to the present embodiment, the yield strength at room temperature is 220 to 500 MPa, the tensile strength at room temperature is 330 to 550 MPa, and the total elongation at room temperature is 20.0% or more. Here, in the present description the term "room temperature" means 25°C.

(Regarding yield strength at room temperature and tensile strength at room temperature)

When the steel sheet is used, for example, as a starting material for battery cans, the manufactured battery cans are required to have a certain degree of strength. If the yield strength of the steel sheet at room temperature is 220 MPa or more and the tensile strength of the steel sheet at room temperature is 330 MPa or more, sufficient strength required for use as a battery can is obtained.

On the other hand, if the yield strength and tensile strength of the steel sheet at room temperature are too high, sufficient press formability will not be obtained. If the yield strength of the steel sheet at room temperature is 500 MPa or less and the tensile strength at room temperature is 550 MPa or less, excellent press formability will be obtained.

Therefore, the yield strength of the steel sheet at room temperature is 220 to 500 MPa, and the tensile strength of the steel sheet at room temperature is 330 to 550 MPa.

A preferable lower limit of the yield strength of the steel sheet at room temperature is 250 MPa, more preferably is 270 MPa, and further preferably is 300 MPa.

A preferable upper limit of the yield strength of the steel sheet at room temperature is 480 MPa, more preferably is 460 MPa, further preferably is 440 MPa, and further preferably is 420 MPa.

A preferable range of the yield strength of the steel sheet at room temperature is, for example, 250 to 480 MPa, more preferably is 270 to 460 MPa, further preferably is 300 to 440 MPa, and further preferably is 300 to 420 MPa.

A preferable lower limit of the tensile strength of the steel sheet at room temperature is 350 MPa, more preferably is 360 MPa, and further preferably is 370 MPa.

A preferable upper limit of the tensile strength of the steel sheet at room temperature is 530 MPa, more preferably is 510 MPa, and further preferably is 490 MPa.

A preferable range of the tensile strength of the steel sheet at room temperature is, for example, 350 to 530 MPa, more preferably is 360 to 510 MPa, and further preferably is 370 to 490 MPa.

(Regarding total elongation at room temperature)

When the steel sheet of the present embodiment is used as a starting material for battery cans, excellent press formability is required. If the total elongation of the steel sheet at room temperature is less than 20.0%, sufficient press formability will not be obtained. Therefore, the total elongation of the steel sheet at room temperature is 20.0% or more.

A preferable lower limit of the total elongation of the steel sheet at room temperature is 21.0%, more preferably is 24.0%, and further preferably is 28.0%.

The upper limit of the total elongation of the steel sheet at room temperature is not particularly limited. In a case where the steel sheet satisfies feature 1 to feature 4, the upper limit of the total elongation of the steel sheet at room temperature is, for example, 50.0%, or for example 45.0%, or for example 40.0%.

A preferable range of the total elongation of the steel sheet at room temperature is, for example, 21.0 to 50.0%, more preferably is 24.0 to 45.0%, and further preferably is 28.0 to 40.0%.

(Method for measuring mechanical properties at room temperature)

The yield strength, tensile strength, and total elongation at room temperature are determined by the following method.

A JIS No. 5 tensile test piece is taken from the steel sheet in accordance with JIS Z 2241 (2011). The parallel portion of the tensile test specimen is to be parallel to the rolling elongation direction of the steel sheet.

The taken tensile test specimen is used to carry out a tensile test at room temperature in the atmosphere to obtain a stress-strain curve.

The yield strength (MPa) at room temperature, tensile strength (MPa) at room temperature, and total elongation (%) at room temperature are determined from the obtained stress-strain curve. Here, the 0.2% proof stress obtained from the stress-strain curve is defined as the yield strength.

[(Feature 5) Regarding aging index AI and high temperature strength]

In the steel sheet of the present embodiment, in addition, the aging index AI is 50.0 MPa or more, and a ratio of the tensile strength at 300°C to the tensile strength at room temperature is 0.90 or more.

(Regarding aging index AI)

As mentioned above, in the steel sheet of the present embodiment, a specified amount of dissolved C and a specified amount of dissolved N are intentionally caused to remain in the steel sheet. By this means, dynamic strain aging occurs in a high temperature range of 200 to 300°C. Specifically, in a stress-strain curve obtained in a tensile test at 300°C, serration occurs. Therefore, the high temperature strength at 200 to 300°C increases.

If the aging index AI is 50.0 MPa or more, in a steel sheet that satisfies feature 1 to feature 4, a sufficient dissolved C amount and dissolved N amount remain in the steel sheet. Therefore, excellent high temperature strength is obtained.

A preferable lower limit of the aging index AI is 52.0 MPa, more preferably is 55.0 MPa, further preferably is 60.0 MPa, and further preferably is 65.0 MPa.

The upper limit of the aging index AI is not particularly limited. The upper limit of the aging index AI is, for example, 100.0 MPa, or for example 95.0 MPa, or for example 90.0 MPa.

A preferable range of the aging index AI is, for example, 52.0 to 100.0 MPa, more preferably is 55.0 to 95.0 MPa, further preferably is 60.0 to 90.0 MPa, and further preferably is 65.0 to 90.0 MPa.

(Method for measuring aging index AI)

The aging index AI is determined by the following method.

A JIS No. 5 tensile test piece is taken from the steel sheet. The parallel portion of the tensile test specimen is to be parallel to the rolling elongation direction of the steel sheet. An original sectional area A (mm) of the parallel portion of the taken tensile test specimen is determined.

The taken tensile test specimen is subjected to a tensile test using a tensile testing machine in accordance with JIS Z 2241 (2011) to apply a prestrain of 10% to the tensile test specimen. A load F1 (kgf) at the time point at which the prestrain of 10% is generated in the tensile test is determined.

The tensile test specimen to which the prestrain of 10% has been applied is subjected to a progressive aging treatment in which the tensile test specimen is held for one hour at 100°C.

The tensile test specimen after the progressive aging treatment is subjected to a tensile test at room temperature (25°C) in the atmosphere in accordance with JIS Z 2241 (2011), and a yield load F2 (kgf) is determined.

The aging index AI (MPa) is determined by Formula (1) using the obtained original sectional area A of the parallel portion, the load F1, and the yield load F2.

$$AI = (F2-F1)/A \quad (1)$$

A value obtained by rounding off the second decimal place of the numerical value obtained by Formula (1) is regarded as the aging index AI (MPa).

(Regarding high temperature strength)

In the steel sheet of the present embodiment, a ratio of the tensile strength at 300°C to the tensile strength at room temperature is 0.90 or more. Here, the tensile strength at room temperature is defined as "$TS_{RT}$", and the tensile strength at 300°C is defined as "$TS_{300}$". In this case, a high-temperature tensile strength ratio $R_{TS}$ that is a ratio of the tensile strength at 300°C $TS_{300}$ to the tensile strength at room temperature $TS_{RT}$ can be defined by Formula (2).

$$R_{TS} = TS_{300}/TS_{RT} \quad (2)$$

If the high-temperature tensile strength ratio $R_{TS}$ is 0.90 or more, sufficiently high tensile strength is obtained even at a high temperature of 300°C. Therefore, in a battery can manufactured using the steel sheet of the present embodiment as a starting material, even if heat generation occurs due to a short-circuit, the battery can can maintain sufficient strength. In the steel sheet of the present embodiment, by satisfying feature 1 to feature 4, and in addition, making the aging index AI 50.0 MPa or more, the high-temperature tensile strength ratio $R_{TS}$ can be made 0.90 or more.

A preferable lower limit of the high-temperature tensile strength ratio $R_{TS}$ is 0.93, more preferably is 0.95, further preferably is 0.97, and further preferably is 1.00.

The upper limit of the high-temperature tensile strength ratio $R_{TS}$ is not particularly limited. In a case where the steel sheet satisfies feature 1 to feature 4, the upper limit of the high-temperature tensile strength ratio $R_{TS}$ is for example, 1.30, more preferably is 1.25, and further preferably is 1.15.

A preferable range of the high-temperature tensile strength ratio $R_{TS}$ is, for example, 0.93 to 1.30, more preferably is 0.95 to 1.25, further preferably is 0.97 to 1.15, and further preferably is 1.00 to 1.15.

(Method for measuring high-temperature tensile strength ratio $R_{TS}$)

The high-temperature tensile strength ratio $R_{TS}$ is determined by the following method.

The tensile strength at room temperature $TS_{RT}$ of the steel sheet is determined by a method in accordance with the above-described (Method for measuring mechanical properties at room temperature).

In accordance with JIS G 0567 (2012), a JIS No. 5 tensile test piece is taken from the steel sheet whose tensile strength at room temperature $TS_{RT}$ was determined. The parallel portion of the tensile test specimen is to be parallel to the rolling elongation direction of the steel sheet.

In accordance with JIS G 0567 (2012), the taken tensile test specimen is subjected to a tensile test at 300°C in the atmosphere, and a stress-strain curve is obtained.

The tensile strength at 300°C $TS_{300}$ (MPa) is determined from the obtained stress-strain curve.

The high-temperature tensile strength ratio $R_{TS}$ is determined based on Formula (2) using the obtained tensile strength $TS_{RT}$ and tensile strength $TS_{300}$.

[Advantageous effects of steel sheet of present embodiment]

As described above, the steel sheet of the present embodiment satisfies feature 1 to feature 4. Therefore, in the steel sheet of the present embodiment, excellent press formability and excellent surface deterioration resistance are obtained in a case where the steel sheet is subjected to press working, such as drawing, during a process for manufacturing battery cans. On the precondition that the steel sheet of the present embodiment satisfies feature 1 to feature 4, the steel sheet of the present embodiment also satisfies feature 5. Therefore, excellent high temperature strength is obtained in the steel sheet of the present embodiment. As a result, in a battery can manufactured using the steel sheet of the present embodiment as a starting material, even if heat generation occurs due to a short-circuit and the temperature of the battery can rises to about 200 to 300°C, a decrease in strength accompanying the increase in the temperature of the battery can can be sufficiently suppressed.

[Further aspect of steel sheet of present embodiment]

The steel sheet of the present embodiment may also include a plating layer formed on a surface thereof. In the present embodiment, the plating layer is one or more types selected from a group consisting of an Ni plating layer and an Ni diffusion plating layer.

An Ni plating layer is a plating layer in which content of Ni is 90% or more in percent by mass. The chemical composition other than Ni of the Ni plating layer is not particularly limited. For example, the Ni plating layer may contain Co and/or W.

Whether or not a plating layer is an Ni plating layer can be confirmed by the following method.

A test specimen including the plating layer is taken from the steel sheet on which the plating layer is formed. The plating layer is subjected to elemental analysis using a fluorescent X-ray analyzer. A calibration curve is prepared in advance using a standard sample of a plating layer with a known content of Ni. The content of Ni (mass%) in the plating layer is determined based on the calibration curve. If the obtained content of Ni is 90% or more in percent by mass, it is determined that the plating layer is an Ni plating layer.

An Ni diffusion plating layer is formed by subjecting a steel sheet on which an Ni plating layer is formed to a well-known alloying heat treatment. An Ni plating layer is formed by a well-known electroplating treatment or electroless plating treatment.

An Ni diffusion plating layer includes an Fe-Ni alloy layer. An Ni diffusion plating layer may include an Ni plating layer, and an Fe-Ni alloy layer formed between the Ni plating layer and the steel sheet surface. Further, an Ni diffusion plating layer may be a plating layer that consists of an Fe-Ni alloy layer. An Fe-Ni alloy layer is formed by Fe in a steel sheet diffusing into an Ni plating layer, and Ni in the Ni plating layer diffusing into the steel sheet as a result of an alloying heat treatment.

A preferable Fe concentration in an outermost surface of an Ni diffusion plating layer is 3% or more in percent by mass. Here, the phrase "outermost surface of an Ni diffusion plating layer" means, for example, a position at a depth of 0.006 μm from the Ni diffusion plating layer surface that is obtained based on an Ar sputtering time measured by glow discharge spectrometry (GDS) as described later.

If the Fe concentration in the outermost surface is 3% or more, when the steel sheet on which the Ni diffusion plating layer is formed is subjected to press working, the occurrence of seizure between the steel sheet and a die will be suppressed. As a result, the press formability will be enhanced.

A more preferable lower limit of the Fe concentration in the outer layer is 10%, and further preferably is 15% or more.

From the viewpoint of corrosion resistance, a preferable upper limit of the Fe concentration in the outer layer is 80%, more preferably is 70%, and further preferably is 60%.

Whether or not the plating layer is an Ni diffusion plating layer can be determined by the following method.

A test specimen including the plating layer is taken from the steel sheet on which the plating layer is formed. The plating layer of the test specimen is subjected to measurement of the element distribution in the depth direction by glow discharge spectrometry (GDS) to thereby measure the Ni concentration and Fe concentration in the depth direction from the surface of the plating layer. A radio frequency glow discharge optical emission spectrometer is used for the measurement. The GDS measurement conditions are to be set as follows.

H.V.: 785 V for Fe, 630 V for Ni
Anode diameter: $\phi$ 4 mm
Gas: Ar
Gas pressure: 600 Pa
Output: 35 W

Note that, for example, a spectrometer with the model name "GD-Profiler 2" manufactured by Horiba Ltd is used as the radio frequency glow discharge optical emission spectrometer.

Measurement data for which the depth obtained by conversion from the Ar sputtering time is less than 0.006 $\mu$m (6 nm) may sometimes include noise due to reasons such as the signal being unstable. That is, in the case of measurement data for which the depth obtained by conversion from the Ar sputtering time is less than 0.006 $\mu$m (6 nm), the plating layer may not necessarily be accurately measured. Therefore, in the present GDS measurement, only data for which the depth obtained by conversion from the Ar sputtering time is 0.006 $\mu$m or more is used. Specifically, a position where the depth obtained by conversion from the Ar sputtering time is a depth of 0.006 $\mu$m is taken as the outermost surface (depth of 0 $\mu$m) of the plating layer.

Whether or not the plating layer is an Ni diffusion plating layer is determined based on the Ni concentration transition and the Fe concentration transition in the depth direction from the outermost surface obtained by the GDS. For example, in a case where the Fe concentration increases from the outermost surface in the depth direction and the Ni concentration decreases from the outermost surface in the depth direction, that is, in a case where, in the plating layer, the Fe concentration shows a positive gradient and the Ni concentration shows a negative gradient in the depth direction from the outermost surface, it is determined that the plating layer is an Ni diffusion plating layer.

[Method for producing steel sheet]

One example of a method for producing the steel sheet of the present embodiment will now be described. One example of a method for producing the steel sheet of the present embodiment includes the following processes.

(Process 1) Steelmaking process
(Process 2) Hot rolling process
(Process 3) Cold rolling process
(Process 4) Annealing process
(Process 5) Plating layer formation process

Among the above processes, the plating layer formation process of process 5 is an optional process. That is, the plating layer formation process may be performed or need not be performed. Each process is described hereunder.

[(Process 1) Steelmaking process]

In the steelmaking process, a molten steel that satisfies feature 1 is produced. The produced molten steel is used to produce a starting material (slab) by a casting process. For example, the aforementioned molten steel is used to produce a slab by a well-known continuous casting process.

[(Process 2) Hot rolling process]

In the hot rolling process, the slab is subjected to hot rolling to produce a hot-rolled steel sheet. The hot rolling process can be performed using known equipment. The hot rolling process includes a rough rolling process of subjecting the slab to rough rolling to produce a sheet bar (intermediate steel sheet), and a finish rolling process of subjecting the sheet bar to finish rolling to produce a hot-rolled steel sheet.

In the rough rolling process, first, the slab is heated. The heated slab is rolled using a roughing mill to produce a sheet bar. Here, a slab heating temperature T0 is to be 1180 to 1250°C. If the slab heating temperature T0 is 1180°C or more, a rolling finishing temperature FT, described later, can be secured. Further, if the slab heating temperature T0 is 1250°C or less, the occurrence of cracks such as edge cracks in the steel sheet during the hot rolling process can be suppressed.

In the finish rolling process, the sheet bar is subjected to further rolling (finish rolling) using a finish rolling mill to produce a hot-rolled steel sheet. In the finish rolling process, the rolling finishing temperature FT is to be 890 to 930°C. If the rolling finishing temperature FT is 890°C or more, recovery and recrystallization of austenite will be promoted. Therefore, the recrystallized austenite will transform and become ferrite. As a result, the in-plane anisotropy $\Delta$r of the steel sheet can be suppressed. If the rolling finishing temperature FT is 930°C or less, coarsening of grains can be suppressed.

The hot-rolled steel sheet after finish rolling is cooled in a cooling zone (run out table: ROT), and thereafter is coiled. At such time, a coiling temperature CT is to be 560 to 600°C.

If the coiling temperature CT is 560°C or more, formation of bainite in the microstructure of the steel sheet will be suppressed. In such case, it will be easy for ferrite to become the main phase in the microstructure of the steel sheet after the annealing process as described later. Furthermore, the in-plane anisotropy $\Delta r$ can be suppressed. On the other hand, if the coiling temperature CT is 600°C or less, excessive formation of carbo-nitrides can be suppressed during coiling. Consequently, the dissolved C amount and dissolved N amount in the steel sheet can be secured. As a result, the aging index AI in the steel sheet after production will be 50.0 MPa or more.

[(Process 3) Cold rolling process]

In the cold rolling process, after subjecting the hot-rolled steel sheet to pickling, cold rolling is performed to produce a cold-rolled steel sheet. The cold rolling process can be performed using known equipment. The temperature during cold rolling is, for example, within the range of room temperature to 200°C.

The cold rolling reduction RR in the cold rolling process is preferably 87 to 91%. If the cold rolling reduction RR is 87 to 91%, in a steel sheet having a chemical composition that satisfies feature 1, on the precondition that other production conditions are also satisfied, the in-plane anisotropy $\Delta r$ can be suppressed.

[(Process 4) Annealing process]

In the annealing process, the cold-rolled steel sheet is subjected to annealing. The annealing is, for example, continuous annealing. The annealing process can be performed using known equipment. In the annealing process, an annealing temperature T1 is to be 720 to 820°C. If the annealing temperature T1 is 720°C or more, a non-recrystallized structure can be sufficiently reduced. Therefore, in the microstructure of the steel sheet after production, ferrite will be the main phase. On the other hand, if the annealing temperature T1 is 820°C or less, coarsening of recrystallized grains can be sufficiently suppressed. Therefore, in the microstructure of the steel sheet after production, the grain size number of ferrite will be 11.0 or more. A holding time t1 at the annealing temperature T1 is, for example, 20 to 60 seconds.

In the annealing process, in addition, the steel sheet after the holding time t1 at the annealing temperature T1 elapses is cooled in two stages as described hereunder.

(First stage cooling)

An average cooling rate $CRr_{1-650}$ in a first temperature range in which the steel sheet temperature decreases from the annealing temperature T1 to 650°C is to be 8°C/sec or less.

(Second stage cooling)

An average cooling rate $CR_{650-250}$ in a second temperature range in which the steel sheet temperature decreases from 650°C to 250°C is to be 15 to 30°C/sec.

Hereunder, the first stage cooling and the second stage cooling are described.

(Regarding first stage cooling)

The first temperature range (temperature range in which the steel sheet temperature decreases from the annealing temperature T1 to 650°C) is a temperature range in which phase transformation can occur in the microstructure of a steel sheet satisfying feature 1.

If the average cooling rate $CR_{T1-650}$ is more than 8°C/sec, it will be easy for a structure (for example, a hard structure such as bainite or martensite) other than ferrite to form. In such case, the area fraction of ferrite in the microstructure of the produced steel sheet will be less than 90%, and ferrite will not be the main phase.

If the average cooling rate $CR_{T1-650}$ is 8°C/sec or less, formation of structure other than ferrite can be sufficiently suppressed. Therefore, in the microstructure of the produced steel sheet, the area fraction of ferrite will be 90% or more, and ferrite will be the main phase.

(Regarding second stage cooling)

The second temperature range (temperature range in which the steel sheet temperature decreases from 650°C to 250°C) is a temperature range in which phase transformation and precipitation of precipitates can occur.

If the average cooling rate $CR_{650-250}$ is less than 15°C/sec, carbo-nitrides will excessively form. In such case, a sufficient amount of dissolved C and a sufficient amount of dissolved N cannot be secured in the steel sheet after production. Therefore, in the steel sheet after production, the aging index AI will be less than 50.0 MPa.

On the other hand, if the average cooling rate $CR_{650-250}$ is more than 30°C/sec, it will be easy for a structure (for example, a hard structure such as bainite or martensite) other than ferrite to form. As a result, sufficient total elongation will not be obtained in the steel sheet.

When the average cooling rate $CR_{650-250}$ is 15 to 30°C/sec, the cooling rate in the second temperature range is appropriate. In this case, on the precondition that other production conditions are satisfied, a sufficient amount of dissolved C and a sufficient amount of dissolved N can be secured in the steel sheet after production. Therefore, in the steel sheet after production, the aging index AI will be 50.0 MPa or more.

The average cooling rate $CR_{T1-650}$ and the average cooling rate $CR_{650-250}$ are determined by the following method. A plurality of thermometers are arranged along the conveyance path inside a continuous annealing furnace. The temperature of the steel sheet is measured by these thermometers at respective points while the steel sheet is passing through the continuous annealing furnace. The average cooling rate $CR_{T1-650}$ (°C/sec) in the first temperature range and the average cooling rate $CR_{650-250}$ (°C/sec) in the second temperature range are calculated based on the temperature measurement results at the respective points and the time taken for the steel sheet to pass between the respective points.

[(Process 5) Plating layer formation process]

The plating layer formation process is an optional process, and does not have to be performed. When producing a steel sheet having an Ni plating layer or an Ni diffusion plating layer, the plating layer formation process is performed.

In the case of forming an Ni plating layer on the surface of the steel sheet, the Ni plating layer formation process is to be performed after the annealing process. Specifically, the steel sheet after the annealing process is immersed in an Ni plating bath, and electroplating or electroless plating is performed. A well-known Ni plating bath can be used as the Ni plating bath. The Ni plating bath is, for example, selected from the group consisting of a Watts bath, a sulfate bath, a sulfamate bath, a Wood's bath, a borofluoride bath, a chloride bath and a citrate bath.

The thickness (or attached amount) of the Ni plating layer formed on the surface of the steel sheet is not particularly limited. The thickness of the Ni plating layer is, for example, 0.3 to 5.0 $\mu$m. The Ni attached amount of the Ni plating layer is, for example, 2.7 to 44.5 g/m$^2$.

The attached amount of the plating layer can be determined by elemental analysis using the aforementioned fluorescent X-ray analyzer. Specifically, a test specimen including the plating layer is taken from the steel sheet on which the plating layer is formed. The surface of the plating layer is subjected to elemental analysis using the fluorescent X-ray analyzer. A calibration curve is prepared in advance using a standard sample of a plating layer with a known Ni attached amount. The Ni attached amount (g/m$^2$) in the plating layer is determined based on the calibration curve. Further, the thickness ($\mu$m) of the plating layer can be determined based on the Ni attached amount.

In the case of forming an Ni diffusion plating layer on the surface of the steel sheet, the Ni plating layer formation process is to be performed before the annealing process. Specifically, at a timing that is after the steel sheet has undergone the cold rolling process and is before the annealing process, the steel sheet is immersed in an Ni plating bath and subjected to electroplating or electroless plating. An Ni plating layer is formed by the above process. The steel sheet on which the Ni plating layer has been formed is subjected to the aforementioned annealing process. During the annealing process, Fe in the steel sheet diffuses into the Ni plating layer, and Ni of the Ni plating layer diffuses into the steel sheet. As a result, an Ni diffusion plating layer that includes an Fe-Ni alloy layer is formed.

[Process other than the processes described above]

In the method for producing the steel sheet of the present embodiment, a temper rolling (skin-pass rolling) process may be performed after the annealing process. The temper rolling process is an optional process, and does not have to be performed.

In the temper rolling process, the steel sheet after the annealing process is subjected to temper rolling. The rolling reduction in the temper rolling is, for example, 0.5 to 5.0%. If the rolling reduction is 0.5% or more, yield point elongation can be sufficiently suppressed in the steel sheet after production. In such case, the occurrence of stretcher strain when press working (drawing) is performed can be suppressed. If the rolling reduction is 5.0% or less, sufficient total elongation will be obtained. Therefore, in the steel sheet after production, sufficient press formability will be obtained.

The steel sheet of the present embodiment can be produced by the above production method.

EXAMPLES

Hereunder, advantageous effects of the steel sheet of the present embodiment are described more specifically by way of examples. These examples are examples for verifying the advantageous effects of the steel sheet of the present embodiment, and are not intended to limit the steel sheet of the present disclosure.

Steel sheets having the chemical compositions shown in Table 1 (Table 1A and Table 1B) were produced by the following method.

[Table 1A]

TABLE 1A

| Steel Number | Chemical Composition (unit is mass%; balance is Fe and impurities) | | | | | | | |
|---|---|---|---|---|---|---|---|---|
| | C | Si | Mn | P | S | Sol.Al | N | B |
| A | 0.055 | 0.01 | 0.30 | 0.015 | 0.007 | 0.015 | 0.0025 | 0.0020 |
| B | 0.060 | 0.02 | 0.25 | 0.012 | 0.015 | 0.040 | 0.0138 | 0.0003 |
| C | 0.043 | 0.08 | 0.37 | 0.009 | 0.012 | 0.031 | 0.0030 | 0.0015 |
| D | 0.067 | 0.05 | 0.21 | 0.013 | 0.013 | 0.028 | 0.0027 | 0.0026 |
| E | 0.051 | 0.07 | 0.32 | 0.021 | 0.009 | 0.037 | 0.0102 | 0.0007 |
| F | 0.062 | 0.03 | 0.35 | 0.017 | 0.018 | 0.024 | 0.0145 | 0.0005 |
| G | 0.048 | 0.02 | 0.27 | 0.023 | 0.005 | 0.023 | 0.0032 | 0.0012 |
| H | 0.062 | 0.05 | 0.31 | 0.018 | 0.011 | 0.035 | 0.0023 | 0.0009 |
| I | 0.051 | 0.03 | 0.23 | 0.011 | 0.023 | 0.026 | 0.0035 | 0.0016 |
| J | 0.056 | 0.06 | 0.35 | 0.026 | 0.015 | 0.041 | 0.0043 | 0.0014 |
| K | 0.065 | 0.08 | 0.26 | 0.014 | 0.009 | 0.081 | 0.0056 | 0.0018 |
| L | 0.052 | 0.04 | 0.36 | 0.012 | 0.012 | 0.032 | 0.0035 | 0.0015 |
| M | 0.020 | 0.04 | 0.25 | 0.014 | 0.017 | 0.025 | 0.0021 | 0.0003 |
| N | 0.103 | 0.06 | 0.37 | 0.026 | 0.014 | 0.036 | 0.0017 | 0.0005 |
| O | 0.068 | 0.05 | 0.23 | 0.029 | 0.016 | 0.033 | 0.0210 | 0.0002 |
| P | 0.045 | 0.07 | 0.34 | 0.018 | 0.021 | 0.031 | 0.0026 | 0.0006 |
| Q | 0.043 | 0.09 | 0.28 | 0.024 | 0.015 | 0.029 | 0.0023 | 0.0018 |

[Table 1B]

TABLE 1B

| Steel Number | Chemical Composition (unit is mass%; balance is Fe and impurities) | | | | | |
|---|---|---|---|---|---|---|
| | Ti | Nb | Cu | Ni | Cr | Sn |
| A | - | - | - | - | - | - |
| B | - | - | - | - | - | - |
| C | - | - | - | - | - | - |
| D | - | - | - | - | - | - |
| E | 0.002 | - | - | - | - | - |
| F | - | 0.003 | - | - | - | - |
| G | - | - | 0.1 | - | - | - |
| H | - | - | - | 0.2 | - | - |
| I | - | - | - | - | 0.1 | - |

(continued)

| Steel Number | Chemical Composition (unit is mass%; balance is Fe and impurities) | | | | | |
|---|---|---|---|---|---|---|
| | Ti | Nb | Cu | Ni | Cr | Sn |
| J | - | - | - | - | - | 0.02 |
| K | - | - | 0.1 | 0.1 | - | - |
| L | 0.001 | - | - | - | 0.1 | - |
| M | - | - | - | - | - | - |
| N | - | - | - | - | - | - |
| O | - | - | - | - | - | - |
| P | 0.112 | - | - | - | - | - |
| Q | - | 0.213 | - | - | - | - |

In Table 1B, the symbol "-" means that the content of the corresponding element was at the level of an impurity or less. For example, "-" means that the content of Ti of steel number A was "0" % when rounded off to the third decimal place. Further, "-" means that the content of Cu of steel number A was "0" % when rounded off to the first decimal place.

Specifically, in the steelmaking process, a slab of each steel number was produced. In the hot rolling process, each produced slab was subjected to hot rolling (rough rolling and finish rolling) to produce a hot-rolled steel sheet. The slab heating temperature T0 (°C), rolling finishing temperature FT (°C), and coiling temperature CT (°C) in the hot rolling process were as shown in Table 2.

[Table 2]

EP 4 692 395 A1

TABLE 2

| Test Number | Steel Number | Hot Rolling Process | | | Cold Rolling Process | Annealing Conditions | | | |
|---|---|---|---|---|---|---|---|---|---|
| | | Slab Heating Temperature T0 (°C) | Rolling Finishing Temperature FT (°C) | Coiling Temperature CT (°C) | Cold Rolling Reduction RR (%) | Annealing Temperature T1 (°C) | Annealing Time t1 (sec) | Average Cooling Rate $CR_{T1\text{-}650}$ (°C/sec) | Average Cooling Rate $CR_{650\text{-}250}$ (°C/sec) |
| 1 | A | 1200 | 910 | 570 | 89 | 720 | 50 | 5 | 20 |
| 2 | B | 1230 | 920 | 580 | 91 | 730 | 40 | 8 | 21 |
| 3 | c | 1220 | 890 | 560 | 90 | 750 | 20 | 3 | 17 |
| 4 | D | 1200 | 930 | 570 | 88 | 740 | 30 | 7 | 15 |
| 5 | E | 1180 | 900 | 560 | 90 | 720 | 50 | 4 | 23 |
| 6 | F | 1210 | 910 | 580 | 87 | 760 | 30 | 6 | 30 |
| 7 | G | 1230 | 900 | 580 | 90 | 730 | 40 | 6 | 22 |
| 8 | H | 1190 | 890 | 570 | 88 | 720 | 50 | 5 | 18 |
| 9 | I | 1210 | 910 | 590 | 89 | 740 | 30 | 7 | 26 |
| 10 | J | 1200 | 900 | 560 | 90 | 730 | 50 | 8 | 24 |
| 11 | K | 1220 | 910 | 580 | 91 | 750 | 40 | 4 | 17 |
| 12 | L | 1240 | 920 | 570 | 87 | 730 | 30 | 5 | 21 |
| 13 | M | 1200 | 900 | 570 | 88 | 720 | 40 | 5 | 18 |
| 14 | N | 1220 | 920 | 600 | 89 | 740 | 30 | 7 | 15 |
| 15 | O | 1210 | 910 | 600 | 90 | 730 | 50 | 4 | 16 |
| 16 | P | 1250 | 920 | 590 | 89 | 800 | 50 | 6 | 17 |
| 17 | O | 1240 | 910 | 600 | 88 | 820 | 40 | 3 | 18 |
| 18 | A | 1200 | 900 | 400 | 89 | 730 | 50 | 5 | 20 |
| 19 | A | 1220 | 920 | 700 | 90 | 720 | 40 | 8 | 22 |
| 20 | A | 1230 | 910 | 570 | 90 | 720 | 60 | 6 | 10 |
| 21 | A | 1210 | 900 | 580 | 89 | 730 | 50 | 4 | 5 |
| 22 | A | 1200 | 910 | 570 | 89 | 720 | 50 | 5 | 60 |

20

| Test Number | Steel Number | Hot Rolling Process | | | Cold Rolling Process | Annealing Conditions | | | |
|---|---|---|---|---|---|---|---|---|---|
| | | Slab Heating Temperature T0 (°C) | Rolling Finishing Temperature FT (°C) | Coiling Temperature CT (°C) | Cold Rolling Reduction RR (%) | Annealing Temperature T1 (°C) | Annealing Time t1 (sec) | Average Cooling Rate $CR_{T1\text{-}650}$ (°C/sec) | Average Cooling Rate $CR_{650\text{-}250}$ (°C/sec) |
| 23 | A | 1200 | 910 | 570 | 89 | 720 | 50 | 15 | 30 |
| 24 | A | 1200 | 910 | 570 | 89 | 720 | 50 | 15 | 15 |

In the cold rolling process, the hot-rolled steel sheet was subjected to cold rolling to produce a thick cold-rolled steel sheet. The cold rolling reduction RR (%) in the cold rolling process was as shown in Table 2. The sheet thickness of the cold-rolled steel sheet of Test No. 11 was 0.20 mm. The sheet thickness of the cold-rolled steel sheet of Test No. 12 was 0.80 mm. The sheet thickness of the cold-rolled steel sheets of the test numbers other than Test Nos. 11 and 12 was 0.30 mm.

Each cold-rolled steel sheet was subjected to a plating layer formation process to form an Ni plating layer on the front and rear sides of the cold-rolled steel sheet. Specifically, electrolytic Ni plating was performed according to well-known conditions. In each test number, the Ni attached amount of the Ni plating layer was 13.0 g/m$^2$ per side. The attached amount of the Ni plating layer was determined by elemental analysis using a fluorescent X-ray analyzer as described above.

The steel sheet on which the Ni plating layer was formed was subjected to an annealing process. The annealing temperature T1, annealing time t1, average cooling rate $CR_{T1-650}$ (°C/sec), and average cooling rate $CR_{650-250}$ (°C/sec) in the annealing process were as shown in Table 2.

The steel sheet after the annealing process was subjected to a temper rolling process. For each test number, the rolling reduction in the temper rolling was 1.2%.

A steel sheet of each test number was produced by the above process. The steel sheet of each test number included an Ni diffusion plating layer on the front side and rear side. Further, the sheet thickness (thickness of the steel sheet excluding the Ni diffusion plating layer) of the steel sheet of Test No. 11 was 0.20 mm. The sheet thickness of the steel sheet of Test No. 12 was 0.80 mm. The sheet thickness of the steel sheets of the test numbers other than Test Nos. 11 and 12 was 0.30 mm.

[Evaluation tests]

The steel sheet of each test number was subjected to the following evaluation tests.

(Test 1) Microstructure observation test

(Test 2) Test to measure grain size number of ferrite

(Test 3) Test to evaluate mechanical properties at room temperature

(Test 4) Aging index AI measurement test

(Test 5) High-temperature tensile strength ratio $R_{TS}$ measurement test

Each test is described hereunder.

[(Test 1) Microstructure observation test]

Based on the methods described above in the section (Method for identifying structures in microstructure and method for measuring area fraction of ferrite), the main phase in the microstructure of the steel sheet of each test number was identified, and the area fraction (%) of ferrite was determined. The results are shown in the column "Main Phase" of the column "Microstructure" in Table 3. In the "Main Phase" column, "F" indicates that the main phase of the microstructure was ferrite, and that the area fraction of ferrite was 90% or more. Further, "B" in the "Main Phase" column indicates that the main phase of the microstructure was bainite, and that the area fraction of bainite was 90% or more (that is, the area fraction of ferrite was 10% or less). Furthermore, "F+B" in the "Main Phase" column means that although the total area fraction of ferrite and bainite was 90% or more, the area fraction of ferrite and the area fraction of bainite were each less than 90%. Note that, in Test No. 12, the area fraction of ferrite was larger than the area fraction of bainite.

[Table 3]

TABLE 3

| Test Number | Microstructure | | Al (MPa) | Room Temperature Yield Strength $YS_{RT}$ (MPa) | Room Temperature Tensile Strength $TS_{RT}$ (MPa) | Room Temperature Total Elongation $EL_{RT}$ (%) | 300°C Tensile Strength $TS_{300}$ (MPa) | $R_{TS}$ ($TS_{300}/TS_{RT}$) | Remarks |
|---|---|---|---|---|---|---|---|---|---|
| | Main Phase | Grain Size Number | | | | | | | |
| 1 | F | 11.5 | 59.1 | 309 | 396 | 29.2 | 383 | 0.97 | Inventive Example |
| 2 | F | 12.0 | 87.5 | 394 | 482 | 21.3 | 505 | 1.05 | Inventive Example |
| 3 | F | 11.5 | 53.6 | 293 | 375 | 31.5 | 355 | 0.95 | Inventive Example |
| 4 | F | 11.5 | 65.2 | 327 | 419 | 27.6 | 410 | 0.98 | Inventive Example |
| 5 | F | 12.0 | 76.3 | 378 | 461 | 23.8 | 477 | 1.03 | Inventive Example |
| 6 | F | 12.0 | 92.7 | 403 | 496 | 20.1 | 525 | 1.06 | Inventive Example |
| 7 | F | 11.5 | 58.9 | 300 | 384 | 30.1 | 372 | 0.97 | Inventive Example |
| 8 | F | 12.0 | 62.3 | 316 | 406 | 28.5 | 402 | 0.99 | Inventive Example |
| 9 | F | 11.5 | 63.5 | 306 | 392 | 29.0 | 391 | 1.00 | Inventive Example |
| 10 | F | 11.5 | 61.7 | 315 | 402 | 28.7 | 394 | 0.98 | Inventive Example |
| 11 | F | 12.0 | 65.8 | 332 | 425 | 27.5 | 434 | 1.02 | Inventive Example |
| 12 | F | 12.0 | 56.5 | 321 | 412 | 28.1 | 391 | 0.95 | Inventive Example |
| 13 | F | 10.5 | 48.5 | 256 | 320 | 36.2 | 286 | 0.89 | Comparative Example |
| 14 | F | 11.5 | 61.3 | 451 | 562 | 17.3 | 548 | 0.98 | Comparative Example |
| 15 | F | 12.0 | 95.3 | 446 | 557 | 15.1 | 594 | 1.07 | Comparative Example |
| 16 | F | 11.5 | 8.5 | 401 | 446 | 18.2 | 375 | 0.84 | Comparative Example |
| 17 | F | 12.0 | 12.3 | 408 | 453 | 17.5 | 378 | 0.83 | Comparative Example |
| 18 | B | - | 62.5 | 405 | 583 | 15.6 | 521 | 0.89 | Comparative Example |
| 19 | F | 11.0 | 3.2 | 301 | 372 | 31.5 | 305 | 0.82 | Comparative Example |
| 20 | F | 11.5 | 38.5 | 304 | 391 | 30.2 | 343 | 0.88 | Comparative Example |
| 21 | F | 11.5 | 26.3 | 298 | 386 | 31.7 | 335 | 0.87 | Comparative Example |
| 22 | F | 11.5 | 46.3 | 361 | 462 | 18.7 | 402 | 0.87 | Comparative Example |
| 23 | F+B | - | 42.1 | 332 | 425 | 19.3 | 361 | 0.85 | Comparative Example |

(continued)

| Test Number | Microstructure | | AI (MPa) | Room Temperature Yield Strength $YS_{RT}$ (MPa) | Room Temperature Tensile Strength $TS_{RT}$ (MPa) | Room Temperature Total Elongation $EL_{RT}$ (%) | 300°C Tensile Strength $TS_{300}$ (MPa) | $R_{TS}$ ($TS_{300}/TS_{RT}$) | Remarks |
|---|---|---|---|---|---|---|---|---|---|
| | Main Phase | Grain Size Number | | | | | | | |
| 24 | F+B | - | 41.3 | 321 | 412 | 19.7 | 350 | 0.85 | Comparative Example |

[(Test 2) Test to measure grain size number of ferrite]

The grain size number of ferrite in the steel sheet of each test number was determined based on the method described above in the section (Method for measuring ferrite grain size number). The determined grain size number is shown in the column "Grain Size Number" of the column "Microstructure" in Table 3. Note that, in the steel sheets of Test Nos. 18, 23, and 24, ferrite was not the main phase in the microstructure. Therefore, the grain size number of ferrite in the steel sheets of these test numbers was not measured (indicated by "-" in the "Grain Size Number" column in Table 3).

[(Test 3) Test to evaluate mechanical properties at room temperature]

For the steel sheet of each test number, yield strength $YS_{RT}$ (MPa) at room temperature, tensile strength $TS_{RT}$ (MPa) at room temperature, and total elongation $EL_{RT}$ (%) at room temperature were determined based on the method described above in the section (Method for measuring mechanical properties at room temperature). The determined yield strength $YS_{RT}$, tensile strength $TS_{RT}$, and total elongation $EL_{RT}$ are shown in the column "Room Temperature Yield Strength $YS_{RT}$ (MPa)", the column "Room Temperature Tensile Strength $TS_{RT}$ (MPa)", and the column "Room Temperature Total Elongation $EL_{RT}$ (%)", respectively, in Table 3.

[(Test 4) Aging index AI measurement test]

The aging index AI (MPa) of the steel sheet of each test number was determined based on the method described above in the section (Method for measuring aging index AI). The determined aging index AI is shown in the column "AI (MPa)" in Table 3.

[(Test 5) High-temperature tensile strength ratio $R_{TS}$ measurement test]

The high-temperature tensile strength ratio $R_{TS}$ of the steel sheet of each test number was determined based on the method described above in the section (Method for measuring high-temperature tensile strength ratio $R_{TS}$). The determined high-temperature tensile strength ratio $R_{TS}$ is shown in the column "$R_{TS}$ ($TS_{300}/TS_{RT}$)" in Table 3.

[Evaluation results]

The evaluation results are shown in Table 3. Referring to Table 3, the steel sheets of Test Nos. 1 to 12 satisfied feature 1 to feature 5. Therefore, in these steel sheets, a prescribed strength was obtained, and sufficient press formability and surface deterioration resistance were obtained. In these steel sheets, in addition, excellent high temperature strength was obtained.

On the other hand, in Test No. 13 the content of C was too low. Consequently, the grain size number of ferrite was too low. In addition, the aging index AI was too low. Therefore, the tensile strength at room temperature $TS_{RT}$ and the high-temperature tensile strength ratio $R_{TS}$ were low and sufficient high temperature strength was not obtained.

In Test No. 14, the content of C was too high. Consequently, the tensile strength at room temperature $TS_{RT}$ was too high. Therefore, the total elongation at room temperature $EL_{RT}$ was low and sufficient press formability was not obtained.

In Test No. 15, the content of N was too high. Consequently, the tensile strength at room temperature $TS_{RT}$ was too high. Therefore, the total elongation at room temperature $EL_{RT}$ was low and sufficient press formability was not obtained.

In Test No. 16, the content of Ti was too high. Consequently, the aging index AI was too low. Therefore, the high-temperature tensile strength ratio $R_{TS}$ was low and sufficient high temperature strength was not obtained. In addition, because Ti carbo-nitrides excessively formed, the total elongation at room temperature $EL_{RT}$ was low and sufficient press formability was not obtained.

In Test No. 17, the content of Nb was too high. Consequently, the aging index AI was too low. Therefore, the high-temperature tensile strength ratio $R_{TS}$ was low and sufficient high temperature strength was not obtained. In addition, because Nb carbo-nitrides excessively formed, the total elongation at room temperature $EL_{RT}$ was low and sufficient press formability was not obtained.

In Test No. 18, although the chemical composition satisfied feature 1, the coiling temperature CT was too low. Consequently, bainite was the main phase in the microstructure of the steel sheet. As a result, the tensile strength at room temperature $TS_{RT}$ was too high, and the total elongation at room temperature $EL_{RT}$ was too low. Therefore, sufficient press formability was not obtained. In addition, the high-temperature tensile strength ratio $R_{TS}$ was low and sufficient high temperature strength was not obtained.

In Test No. 19, although the chemical composition satisfied feature 1, the coiling temperature CT was too high.

Consequently, the aging index AI was low. As a result, the high-temperature tensile strength ratio $R_{TS}$ was low and sufficient high temperature strength was not obtained.

In Test Nos. 20 and 21, although the chemical composition satisfied feature 1, in the annealing process the cooling rate $CR_{650-250}$ in the temperature range from 650°C until the steel sheet temperature reached 250°C was slow. Therefore, the aging index AI was low. As a result, the high-temperature tensile strength ratio $R_{TS}$ was low and sufficient high temperature strength was not obtained.

In Test No. 22, although the chemical composition satisfied feature 1, in the annealing process the cooling rate $CR_{650-250}$ in the temperature range from 650°C until the steel sheet temperature reached 250°C was fast. Therefore, the aging index AI was low. As a result, the high-temperature tensile strength ratio $R_{TS}$ was low and sufficient high temperature strength was not obtained. In addition, the total elongation at room temperature $EL_{RT}$ was too low. As a result, sufficient press formability was not obtained.

In Test Nos. 23 and 24, although the chemical composition satisfied feature 1, in the annealing process the cooling rate $CR_{T1-650}$ in the temperature range from the annealing temperature T1 until the steel sheet temperature reached 650°C was fast. In the microstructure of the steel sheet, bainite also formed and not only ferrite, and the ferrite area fraction was less than 90%. Consequently, the total elongation at room temperature $EL_{RT}$ was too low. Therefore, sufficient press formability was not obtained. In addition, the aging index AI was low. As a result, the high-temperature tensile strength ratio $R_{TS}$ was low and sufficient high temperature strength was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

**Claims**

1.  A steel sheet that has a chemical composition consisting of, in mass%,

    C: 0.040 to 0.070%,
    Si: more than 0 to 0.10%,
    Mn: 0.20 to 0.40%,
    P: more than 0 to 0.030%,
    S: more than 0 to 0.030%,
    sol. Al: 0.005 to 0.100%,
    N: more than 0% to 0.0150%,
    B: 0.0001 to 0.0030%,
    Ti: 0 to 0.010%,
    Nb: 0 to 0.010%,
    Cu: 0 to 0.5%,
    Ni: 0 to 0.5%,
    Cr: 0 to 0.3%, and
    Sn: 0 to 0.05%,
    with the balance being Fe and impurities, and
    has a microstructure in which ferrite is a main phase and a grain size number of the ferrite is 11.0 or more, wherein
    the steel sheet has a sheet thickness that is 0.15 to 1.00 mm;
    the steel sheet has a yield strength that is 220 to 500 MPa at room temperature, a tensile strength that is 330 to 550 MPa at room temperature, and a total elongation that is 20.0% or more at room temperature;
    the steel sheet has an aging index AI that is 50.0 MPa or more; and
    a ratio of a tensile strength of the steel sheet at 300°C to the tensile strength at room temperature is 0.90 or more.

2.  The steel sheet according to claim 1, further comprising:

    a plating layer formed on a surface of the steel sheet,
    wherein the plating layer is one or more types selected from a group consisting of an Ni plating layer and an Ni diffusion plating layer.

3.  The steel sheet according to claim 1, wherein:
    the chemical composition contains one or more types of element selected from a group consisting of:

Ti: 0.001 to 0.010%,
Nb: 0.001 to 0.010%,
Cu: 0.1 to 0.5%,
Ni: 0.1 to 0.5%,
Cr: 0.1 to 0.3%, and
Sn: 0.01 to 0.05%.

4. The steel sheet according to claim 1, wherein:
the balance of the microstructure consists of one or more types selected from a group consisting of pearlite, cementite, bainite, and martensite.

## INTERNATIONAL SEARCH REPORT

| International application No. |
|---|
| **PCT/JP2023/038987** |

**A. CLASSIFICATION OF SUBJECT MATTER**

*C22C 38/00*(2006.01)i; *C22C 38/54*(2006.01)i; *C21D 8/04*(2006.01)n; *C21D 9/48*(2006.01)n
FI: C22C38/00 301S; C22C38/00 301T; C22C38/54; C21D8/04 A; C21D9/48 E; C21D9/48 H

According to International Patent Classification (IPC) or to both national classification and IPC

**B. FIELDS SEARCHED**

Minimum documentation searched (classification system followed by classification symbols)

C22C38/00-38/60; C21D8/02-8/04; C21D9/46-9/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/009213 A1 (NIPPON STEEL CORPORATION) 09 January 2020 (2020-01-09) claims, table 1 | 1-4 |
| A | WO 2019/198819 A1 (NIPPON STEEL CORPORATION) 17 October 2019 (2019-10-17) claims, table 1 | 1-4 |
| A | WO 97/29217 A1 (NKK CORP.) 14 August 1997 (1997-08-14) claims, tables 1, 2, 7 | 1-4 |
| A | WO 2008/136290 A1 (JFE STEEL CORPORATION) 13 November 2008 (2008-11-13) claims, page 10, line 28 to page 11, line 3, tables 1-3 | 1-4 |
| A | WO 99/11835 A1 (KAWASAKI STEEL CORPORATION) 11 March 1999 (1999-03-11) claims, tables 6-8 | 1-4 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 December 2023** | **16 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/038987** |

| Patent document cited in search report | | | Publication date (day/month/year) | Patent family member(s) | | | Publication date (day/month/year) |
| --- | --- | --- | --- | --- | --- | --- | --- |
| WO | 2020/009213 | A1 | 09 January 2020 | EP | 3819406 | A1 | |
| | | | | claims, table 1 | | | |
| | | | | US | 2021/0269932 | A1 | |
| | | | | CN | 112368425 | A | |
| WO | 2019/198819 | A1 | 17 October 2019 | US | 2021/0032765 | A1 | |
| | | | | claims, table 1 | | | |
| | | | | CN | 111989424 | A | |
| WO | 97/29217 | A1 | 14 August 1997 | EP | 822266 | A1 | |
| | | | | claims, tables 1, 2, 7 | | | |
| | | | | US | 6126759 | A | |
| | | | | CN | 1188515 | A | |
| | | | | JP | 9-209083 | A | |
| WO | 2008/136290 | A1 | 13 November 2008 | EP | 2138596 | A1 | |
| | | | | claims, paragraphs [0043]-[0044], tables 1-3 | | | |
| | | | | US | 2010/0116832 | A1 | |
| | | | | CN | 101663412 | A | |
| | | | | JP | 2008-274332 | A | |
| WO | 99/11835 | A1 | 11 March 1999 | EP | 943696 | A1 | |
| | | | | claims, tables 6-8 | | | |
| | | | | CN | 1243546 | A | |
| | | | | JP | 11-80886 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3516813 B
- JP 5359709 B
- WO 2016080344 A
- WO 2016060248 A